# FASCICULE DE BREVET EUROPEEN

(11) **EP 2 919 947 B1**
(45) Date de publication et mention de la délivrance du brevet: **02.12.2020**
(21) Numéro de dépôt: 13789333.5
(22) Date de dépôt: 12.11.2013
(51) Int. Cl.: B25J 9/00, B25J 18/06, B25J 17/02

(54) **BRAS ARTICULÉ**
GELENKARM
ARTICULATED ARM

(30) Priorité: 14.11.2012 FR 1260852
(43) Date de publication de la demande: 23.09.2015
(73) Titulaire: Commissariat à l'Énergie Atomique et aux Énergies Alternatives, 75015 Paris (FR)
(72) Inventeur: REY, Frédéric, F-04860 Pierrevert (FR); ALOUANI, Slim, F-13090 Aix en Provence (FR)
(74) Mandataire: Hautier, Nicolas
(86) Numéro de dépôt international: PCT/EP2013/073619
(87) Numéro de publication internationale: WO 2014/076080

(56) Documents cités:
- US-A- 4 393 728
- US-A- 4 848 179
- US-A1- 2009 182 436
- US-A1- 2009 314 119
- US-A1- 2012 048 156

## Description

### DOMAINE TECHNIQUE DE L'INVENTION

L'invention concerne le domaine de la robotique et plus particulièrement celui des bras poly-articulés. Elle trouve pour application non limitative mais particulièrement avantageuse le domaine de l'inspection et de la réparation des réacteurs nucléaires.

### ÉTAT DE LA TECHNIQUE

Dans certains domaines comme le nucléaire par exemple, l'utilisation de robots toujours plus précis et robustes est de plus en plus importante. En effet, dans un souci croissant d'améliorer la sécurité des réacteurs nucléaires, le recours aux robots semble particulièrement séduisant pour effectuer des missions d'inspection et/ou de réparation alors que le réacteur est en service (ces missions sont usuellement qualifiées d'ISIR pour *«In Service Inspection and Repair*» qui signifie en français « inspection et réparation en cours de service »). Ces robots peuvent également intervenir sur des chantiers de déconstruction d'installations, principalement de démantèlement nucléaire et aussi lors d'accidents nucléaires ou plus généralement d'accidents industriels rendant inaccessibles, sauf à engendrer un risque important pour des opérateurs humains, des zones où il s'agit d'intervenir.

Typiquement, ces robots doivent être capables d'embarquer des capteurs, des outils de mesure et de réparation dans un bloc nucléaire.

Les robots utilisés actuellement sont généralement montés sur une perche manipulée depuis l'extérieur de la cuve principale du réacteur. Les principaux accès à l'intérieur de cette cuve sont situés sur la dalle. On peut introduire par ces accès des mécanismes d'inspection ou de réparation. Ces solutions sont globalement satisfaisantes lorsque les zones à inspecter sont faciles d'accès. Il n'avait jusqu'à présent jamais été exigé d'accéder aux parties immergées les plus profondes de ce type de réacteur. Compte tenu des évolutions de réglementation, l'Autorité de Sûreté Nucléaire exige maintenant que l'on puisse inspecter tout ou partie de ces zones. Les moyens employés jusqu'à présent ne permettent pas cela.

Le besoin croissant en termes de sécurité exige donc qu'au cours des missions d'ISIR les robots doivent accéder à des zones difficiles d'accès dans le bloc réacteur. En outre ces zones difficiles d'accès peuvent parfois se situer à une distance relativement importante du point d'entrée du robot dans le réacteur.

Les solutions connues faisant intervenir des perches ne permettent pas de positionner le robot dans des zones difficiles d'accès et ne sont donc pas adaptées aux exigences élevées en terme d'ISIR. En outre, ces solutions présentent des problèmes en termes de décontamination du fait de leur difficulté de nettoyage. Les outils d'inspection et de réparation sont introduits dans la cuve principale du réacteur lors d'opérations spécifiques. Ces outils ne restent pas dans la cuve en dehors de ces périodes et donc sont absents lors des phases de fonctionnement du réacteur. Il est donc nécessaire de sortir et déplacer les moyens mécanisés d'ISIR. Il est par ailleurs prévu de réaliser un contrôle et un entretien et/ou maintenance de ces équipements. Pour ces raisons, il est nécessaire de limiter la contamination qu'ils peuvent emporter avec eux alors qu'on les sort du réacteur. De même ils doivent être lavables le plus facilement possible avec le niveau de propreté le plus élevée possible. Pour ces raisons, il est impératif de limiter les zones de rétentions en caloporteur sur ces outils.

Les robots sont introduits dans la cuve principale du réacteur via un accès au niveau de la dalle du réacteur. Ils sont positionnés grâce à un mécanisme que l'on appelle « positionneur » et qui comprend un degré de liberté en rotation (rotation propre) et un degré de liberté en translation pour assurer la descente dans la cuve. Le positionneur est fixé à la dalle. Le robot est fixé à l'autre extrémité du positionneur.

Par ailleurs, certains réacteurs imposent aux robots un environnement particulièrement contraignant. Tel est le cas des réacteurs à caloporteurs de 4^{ème} génération. Dans ce type de réacteur, le caloporteur est généralement du sodium. Ce métal est chimiquement très réactif. Le robot et ses articulations doivent conserver leur intégrité au contact de ce fluide caloporteur.

Or, les robots comprennent des organes, électriques, des capteurs et des moteurs par exemple, qui ne peuvent pas être disposés au contact de fluide caloporteur tel que le sodium. En outre, la température du caloporteur demeure relativement élevée pour maintenir ce dernier à l'état liquide, ce qui représente une contrainte additionnelle. Le réacteur ASTRID (*Advanced Sodium Technological Reactor for Industrial Demonstration*) constitue un exemple de ce type de réacteur.

Dans le cadre du développement de la présente invention, il a été constaté que les bras robotisés utilisés par exemple dans l'industrie sur les chaines d'assemblage présentent des inconvénients lorsqu'ils sont soumis aux contraintes mentionnées ci-dessus.

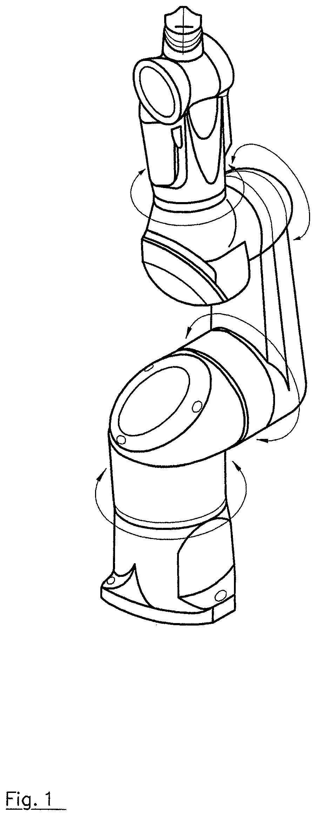

Par exemple, dans le domaine industriel, on a souvent recours à des bras robotisés formés par une succession de pivots travaillant en cisaillement au niveau des jonctions de leurs articulations et présentant des axes de rotation perpendiculaires. Un tel bras est illustré en figure 1. Afin de conserver l'intégrité du robot en présence de fluide tel que le sodium, il a été envisagé, dans le cadre de la présente invention, d'isoler les articulations du fluide caloporteur en les enveloppant dans une gaine. Il s'est alors avéré que la gaine se déchire relativement rapidement.

Dans le cadre de la présente invention, il a alors été envisagé de former une étanchéité au niveau des articulations en prévoyant des ouvertures très étroites et munies de joint d'étanchéité au niveau des portées situées en regard lors du cisaillement. Cette solution présente également des limites en termes de fiabilité de l'étanchéité et de tenue dans le temps.

Une autre solution a été envisagée et prévoit de remplacer les joints d'étanchéité par une surpression de gaz à l'intérieur de l'articulation avec un bullage depuis l'intérieur vers l'extérieur de l'articulation. Cette solution a pour inconvénient d'être complexe et pas suffisamment fiable.

Dans le cadre du développement de la présente invention, il a aussi été envisagé de recourir à un bras formé d'une succession de segments articulés entres eux par des liaisons de type rotule à doigt. Avec ce type de liaison, l'articulation porte le centre de rotation autour duquel ces rotations sont effectuées et on peut effectuer des rotations selon deux axes perpendiculaires entre eux.

La capacité de charge de ce type d'articulation est relativement limitée.

En outre, cette articulation présente les inconvénients mentionnés ci-dessus concernant l'isolation des articulations par rapport à un fluide dans lequel est immergé le bras robotisé. En particulier, il a été constaté qu'une gaine placée autour du bras se déchire rapidement.

Il existe donc un besoin consistant à proposer un bras mécanisé présentant au moins deux degrés de liberté en rotation et présentant une étanchéité améliorée par rapport à un fluide dans lequel il serait introduit. La présente invention a pour objet de proposer une solution qui réponde à ce besoin.

Les documents suivants décrivent des bras articulés pour des applications spécifiques et non prévus pour le milieu nucléaire ou pour les milieux extrêmes : US4848179, US2009/0314119. US4848179 décrit un bras articulé muni d'une gaine. La gaine enveloppe les articulations et est conformée pour suivre le mouvement du bras articulé et pour être maintenue à distance des actionneurs linéaires quel que soit le mouvement du bras articulé.

US2009/0314119 décrit un bras articulé comprenant une structure longitudinale encastrée dans un support à l'une de ses extrémités et en liaison rotule avec un autre support à l'autre de ses extrémités.

Le document US2012/0048156 décrit une plateforme mobile comprenant six actionneurs linéaires présentant chacun deux extrémités en liaison rotule avec un support, la plateforme formant un hexapode.

Le document US2009/01822436 décrit un bras robotisé présentant des articulations sous forme de liaisons rotules. Des câbles peuvent être passés à travers des trous formés dans les rotules.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour pallier les inconvénients de l'art antérieur, la présente invention concerne un bras articulé selon la revendication 1.

Ainsi, l'invention propose un bras robotisé présentant au moins deux degrés de liberté en rotation par articulation selon deux axes perpendiculaires à la direction principale selon laquelle s'étend le bras. Il s'est avéré que la gaine étanche présente une résistance à l'usure et une durée de vie bien supérieure aux gaines enveloppant les bras robotisés des solutions connues décrites dans la section relative à l'art antérieur.

Dans le cadre du développement de la présente invention, il a été observé que dans les solutions connues, les centres des rotations se situent à l'intérieur de la gaine ce qui induit des rayons de courbure très faibles et concentre donc les contraintes sur des zones réduites de la gaine. Au fur et à mesure des rotations générées par les articulations, la fatigue de ces zones s'accroit très rapidement et des ruptures apparaissent. Avec le bras robotisé selon l'invention, les centres de rotation de chaque articulation sont repoussés à l'extérieur de la gaine ou tout au moins en dehors de l'articulation.

Les sollicitations appliquées à la gaine sont donc réparties de manière plus homogène suivant sa longueur. On limite, voire on supprime alors les zones de forte fatigue. La résistance à la fatigue et la durée de vie de la gaine sont alors améliorées.

L'invention offre ainsi une solution fiable, robuste et simple pour améliorer la protection des articulations par rapport au milieu environnant dans lequel elles évoluent.

En outre, cette solution présente l'avantage d'empêcher le contact du sodium avec le mécanisme du bras robotisé. Cela limite considérablement les zones de rétention possible de sodium et réduit la difficulté liée à un nettoyage et une décontamination du bras robotisé. Cela est particulièrement utile quand le bras a terminé son travail dans la cuve et qu'il en est ressorti. Il doit alors être nettoyé voire entretenu et maintenu et cela est facilité par la présence limitée de sodium.

L'invention apporte une solution particulièrement efficace pour former des bras poly-articulés destinés à des missions d'ISIR dans des réacteurs nucléaires. Elle est particulièrement avantageuse dans les réacteurs à caloporteur sodium de 4^{ème} génération.

Selon un mode de réalisation avantageux, la gaine est de préférence conformée pour être maintenue à distance des actionneurs linéaires et des liaisons rotule quel que soit le mouvement du bras articulé. Ainsi, même lorsque une pression extérieure est appliquée sur la gaine, par exemple une pression ponctuelle appliquée sur l'enveloppe externe de la gaine ou par exemple une pression de l'environnement extérieur à la gaine, cette dernière est maintenue à distance des actionneurs des articulations. Il n'y a donc pas de contact entre la gaine et les rotules couplant les actionneurs linéaires aux supports ou entre la gaine et un vérin ou sa tige formant l'actionneur.

Selon un mode de réalisation avantageux, la gaine présente de préférence un volume qui ne peut pas être modifié sensiblement par l'effet d'une pression extérieure comme par exemple la pression liée à une immersion dans un liquide ou par une pression ponctuelle. Ainsi, même si le bras est immergé dans un liquide ou est disposé dans un fluide sous pression, la gaine conserve un volume qui est fixé par des considérations géométriques et n'est pas influencé par la pression. De préférence, le volume de la gaine est constant.

De manière avantageuse, cela permet d'éviter que sous l'effet de la pression la gaine n'entre au contact des articulations ce qui pourrait la déchirer ou endommager les actionneurs linéaires.

En outre, et de manière également avantageuse, cela permet d'augmenter la poussée d'Archimède s'exerçant sur le bras, par rapport à une solution reposant sur une gaine compressible. La poussée d'Archimède s'oppose au poids du bras. Ce dernier peut donc être avoir une masse plus élevée, par exemple en étant plus allongé qu'un bras avec gaine déformable ou qu'un bras sans gaine, sans que l'on ait pour autant à prévoir de structure ou de renforcement mécanique pour compenser cette augmentation de masse. La maniabilité et/ou la capacité de charge externe du bras sont donc significativement améliorées.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 illustre un exemple de bras poly-articulé selon l'art antérieur.
La figure 2 illustre, de manière schématique, un exemple de bras poly-articulé selon l'invention.
La figure 3 illustre, de manière encore plus schématique, un exemple de bras poly-articulé selon l'invention.
La figure 4 illustre, de manière schématique, un exemple non limitatif d'une articulation intégrée dans un bras poly-articulé selon l'invention.
La figure 5 est illustre un deuxième mode de réalisation d'une articulation intégrée dans un bras poly-articulé selon l'invention.
La figure 6 est une coupe de l'articulation selon le mode de réalisation illustré en figure 5.
La figure 7 illustre un bras poly-articulé comportant une pluralité d'articulations conformes au mode de réalisation illustré en figure 6 et qui sont montées en série.
La figure 8 illustre, de manière schématique, les forces qui s'appliquent sur un bras poly-articulé illustré en figure 7.
La figure 9 illustre, de manière schématique, un exemple de bras poly-articulé selon l'invention intégrant des articulations telles qu'illustrées en figure 5 et 6, ainsi qu'une gaine d'étanchéité.
La figure 10 illustre, de manière schématique, un autre mode de réalisation de l'invention dans lequel chaque articulation comprend un seul actionneur linéaire.

La FIGURE 11 illustre, un mode de réalisation dans lequel la structure de reprise d'effort est creuse.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions relatives des différents éléments ne sont pas représentatives de la réalité.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
- De préférence, la gaine enveloppe toutes les articulations, éventuellement à l'exception des articulations des d'extrémité du bras articulé.
- Avantageusement, le volume de la gaine reste constant ou ne varie pas de plus de 10% ou de préférence ne varie pas de plus de 5% lorsqu'elle est soumise à une pression inférieure ou égale à 10 bars et de préférence inférieure ou égale à 5 bars.
- De préférence, la gaine est un tube onduleux, également désigné tube à soufflets.
- De préférence, la gaine est en réalisée en un matériau pris parmi les nuances d'acier inoxydable, le titane, le carbone, le cuivre, les polymères dont le silicone ou une combinaison de ces matériaux.
- Selon un mode de réalisation avantageux, les premier et deuxième supports sont conformés pour maintenir la gaine à distance de l'au moins un actionneur linéaire.
- Selon un mode de réalisation avantageux, le bras comprend une structure de soutien configurée pour maintenir la gaine à distance de l'au moins un actionneur linéaire. Selon un autre mode de réalisation avantageux, la gaine est maintenue à distance de l'au moins un actionneur linéaire par la pression régnant à l'intérieur de la gaine. Le bras articulé comprend un gaz enfermé à l'intérieur de la gaine. Ainsi le bras articulé comprend un gaz enfermé à l'intérieur de la gaine.
- Selon un mode de réalisation avantageux, le bras est configuré pour maintenir la gaine à distance des actionneurs linéaires et des supports, c'est-à-dire également des articulations.
- Selon un mode de réalisation avantageux, la gaine comprend, en plus des articulations, un fluide. De préférence, le fluide est plus léger que le fluide dans lequel

le bras est destiné à évolué. Par exemple, le fluide à l'intérieur de la gaine est un gaz, tel que l'air et le bras est immergé dans un liquide, tel que l'eau ou le sodium. Le gaz est enfermé dans la gaine. Il ne peut donc pas s'en échapper.
- De préférence, la gaine est monolithique. Alternativement, la gaine comprend une enveloppe étanche soutenue par une structure de soutien.
- Sans que cela soit limitatif de l'invention, les supports sont en un matériau pris parmi : l'acier, l'acier inoxydable, le titane, les matériaux composites dont ceux composés de carbone ou de verre, ou une combinaison de ces matériaux.
- De préférence, chaque articulation présente une longueur et une largeur telles que le rapport longueur sur largeur est compris entre 0.5 et 1, la longueur étant prise selon la direction longitudinale du bras et la largeur étant prise selon une direction transversale à la direction longitudinale. La direction longitudinale est la direction selon laquelle le bras présente la plus grande dimension lorsqu'il est rectiligne. La direction longitudinale est la direction selon laquelle le bras s'étend lorsqu'il est rectiligne. Cette direction est notée Rz. Ce rapport permet d'améliorer la dextérité du bras articulé.
- Avantageusement, le bras comprend au moins huit articulations.
- De préférence, les actionneurs linéaires et la structure de reprise assurent à eux seuls l'articulation mécanique entre le premier et de deuxième support. Il n'y a donc pas d'autres éléments prévus pour déplacer ou retenir les deux supports entre eux.
- Avantageusement, au moins l'une des articulations comprend six actionneurs linéaires de manière à former une articulation hexapode. Les six actionneurs linéaires sont avantageusement disposés de manière à supprimer toute position de rebroussement ou de blocage.
- Selon l'invention, au moins une articulation et de préférence toutes les articulations comprennent : une structure de reprise d'effort qui est d'une part encastrée sur le premier support et d'autre part couplée au deuxième support par une liaison rotule. Cette structure permet de reprendre les efforts tranchants et de dédier l'effort du ou des actionneurs aux mouvements de rotation. Chaque articulation peut ainsi présenter un encombrement et un poids réduit. De ce fait l'ensemble de la structure présente un poids réduit. Elle peut donc présenter une longueur plus grande et/ou un nombre plus grand d'articulations, améliorant de ce fait l'accessibilité et la dextérité du bras articulé.
- Avantageusement, deux articulations en série comprennent un support commun. Le nombre de pièces et le poids de la structure sont ainsi réduits. Avantageusement, tous les supports, à l'exception de ceux des extrémités du bras articulé sont communs à deux articulations.
- De préférence, le centre de rotation de la liaison rotule de couplage de la structure de reprise d'effort au deuxième support est situé dans l'épaisseur du deuxième support.
- Avantageusement, le centre de rotation de la liaison rotule articulant la structure de reprise d'effort sur le deuxième support est situé entre deux plans coupant le deuxième support, lesdits deux plans étant parallèles entre eux et parallèles à un plan défini par deux axes de rotation Rx, Ry perpendiculaires entre eux et autour desquels le deuxième support est mis en rotation par rapport au premier support en maintenant le premier support fixe. L'axe Rz est l'axe de l'éventuelle rotation propre du deuxième support, c'est-à-dire la rotation du deuxième support sur lui-même. La structure de reprise d'effort s'étend selon une direction principale. Typiquement, la direction Rz est la direction principale selon laquelle la structure de reprise d'effort. La direction Rz est la direction définie par la droite passant par la liaison encastrement et le centre de rotation de la liaison rotule couplant la structure de reprise d'effort sur le deuxième support. Cette direction est donc fixe quelle que soit le déploiement des actionneurs linéaires.
- Avantageusement, le centre des liaisons rotules par lesquelles les actionneurs linéaires sont articulés au premier support sont coplanaires. Le plan défini par le centre des liaisons rotules par lesquelles les actionneurs linéaires sont articulés au premier support est parallèle à deux plans, parallèles entre eux, traversant le deuxième support et entre lesquels est situé le centre de rotation de la liaison rotule couplant la structure de reprise d'effort sur le deuxième support.
- Le contour du deuxième support définit une enveloppe externe et ledit centre de rotation de la liaison rotule formée par le deuxième support et la structure de reprise d'effort est situé à l'intérieur de cette enveloppe.
- De préférence, le centre de rotation de la liaison rotule est idéalement localisé dans le plan médian du deuxième support.
- De préférence, le deuxième support présente une face interne tournée vers la structure de reprise d'effort et une face externe opposée à la face interne et dans lequel ledit centre de rotation est situé entre les faces interne et externe, idéalement dans un plan médian à ces deux faces.
- De préférence, le centre de rotation de la liaison rotule couplant la structure de reprise d'effort sur le deuxième support est située à égale distance de la face externe

et de la face interne du deuxième support, soit au milieu de l'épaisseur du deuxième support.
- Selon un mode de réalisation non limitatif, la face interne et la face externe sont planes.
- Selon un mode de réalisation non limitatif, la structure de reprise d'effort est un bras de liaison dont une première extrémité est encastrée sur le premier support et dont une deuxième extrémité est couplée au deuxième support par une liaison rotule. De préférence, la structure de reprise d'effort est un tube.
- Selon un mode de réalisation, l'invention prévoit une articulation basée sur une articulation de type plateforme de Stewart et intégrant d'autres caractéristiques telles qu'une structure de reprise des efforts tranchants.
- Les actionneurs linéaires sont des bras rétractables. Les actionneurs linéaires sont par exemple des vérins hydrauliques, des vérins pneumatiques ou des vérins à vis etc.
- Les actionneurs linéaires ne comprennent pas de liaison pivot ou rotule autre que la liaison rotule permettant leur couplage aux premier et deuxième supports. Un actionneur linéaire, pris isolément, est donc mobile uniquement en translation et éventuellement en rotation autour de son axe de translation.
- Le premier support est rigide. Il ne comprend pas d'articulation autre que celles avec des éléments extérieurs auquel il est connecté (actionneurs, structure de reprise d'effort par exemple). De même, le deuxième support est rigide. Il ne comprend pas d'articulation autre que celle avec des éléments extérieurs auquel il est connecté.
- Avantageusement, ledit centre de rotation de la liaison rotule formée par le deuxième support et la structure de reprise d'effort est situé au centre d'un cercle formé par les liaisons rotules par lesquelles les actionneurs linéaires sont articulés sur le deuxième support.
- Avantageusement, la structure de reprise d'effort est encastrée sur le premier support au centre d'un cercle formé par les liaisons rotules par lesquelles les actionneurs linéaires sont articulés sur le premier support.
- Avantageusement, les liaisons rotules par lesquelles les actionneurs linéaires sont articulés au premier support présentent chacune un centre de rotation qui est situé dans l'épaisseur du premier support. Ainsi, le centre de rotation des liaison rotules couplant les actionneurs au premier support est situé entre deux plans passant par le premier support, lesdits deux plans étant parallèles entre eux et parallèles à un plan défini par deux axes de rotation Rx, Ry perpendiculaires entre eux et autour desquels le deuxième support est déplacé en rotation par rapport au premier support en maintenant le premier support fixe. De préférence, le centre de rotation des liaison rotules couplant les actionneurs au premier support est situé entre deux plans passant par le premier support, lesdits deux plans étant parallèles entre eux et perpendiculaires à l'axe Rz passant d'une part par la liaison encastrement entre la structure de reprise d'effort et le premier support et passant d'autre part par le centre de la liaison rotule couplant la structure de reprise d'effort sur le deuxième support. Avantageusement, le bras de levier entre les liaisons rotule et le premier support est réduit, limitant de ce fait les efforts générés sur le premier support et les rotules.
- Avantageusement, les liaisons rotules par lesquelles les actionneurs linéaires sont articulés au deuxième support présentent un centre de rotation qui est situé dans l'épaisseur du deuxième support. Avantageusement, le bras de levier entre les liaisons rotule et le deuxième support est réduit, limitant de ce fait les efforts générés sur le deuxième support et les rotules.
- Selon un mode de réalisation non limitatif, au moins l'un parmi le premier et le deuxième support forme une platine. Ainsi, le centre de rotation de la rotule couplant la structure de reprise d'effort au deuxième support est compris dans l'épaisseur e₂ du deuxième support. L'épaisseur e₂ peut se définir par une dimension entre deux points du deuxième support prise selon une direction parallèle à la direction principale selon laquelle la structure de reprise d'effort s'étend. Avantageusement la distance entre une face externe ou interne du deuxième support et le centre de la liaison rotule couplant la structure de reprise d'effort sur le deuxième support est égale à e₂/2.
- Selon un mode de réalisation non limitatif, au moins un support pris parmi le premier et le deuxième support du système hexapode comporte un connecteur configuré pour coopérer avec une extrémité d'une structure de reprise d'effort de manière à former respectivement un encastrement et une liaison rotule.
- Avantageusement, le connecteur est également configuré pour coopérer avec une structure de reprise d'effort additionnelle de manière à former : une liaison encastrée avec l'une parmi la structure de reprise d'effort et la structure de reprise d'effort additionnelle ; une liaison rotule avec l'autre parmi la structure de reprise d'effort et la structure de reprise d'effort additionnelle. Ainsi, un même connecteur est commun à deux articulations.
- Avantageusement, au moins l'un parmi le premier et le deuxième support comporte un connecteur configuré pour coopérer avec ladite structure de reprise d'effort de manière à former ensemble ledit encastrement, respectivement ladite liaison rotule. Avantageusement, le connecteur étant en outre configuré de manière à coopérer avec une deuxième structure de reprise d'effort d'une deuxième articulation, les deux articulations étant montées en série, de manière à former avec cette deuxième structure de reprise d'effort une liaison rotule, respectivement un encastrement, le même connecteur coopérant ainsi avec les structures de reprise d'effort de deux articulations montées en série.
- Avantageusement, le connecteur forme une pièce monolithique.
- Avantageusement, les structures de reprise d'effort de deux articulations montées en série sont solidarisées aux supports par les connecteurs uniquement.
- Avantageusement, le support comportant le connecteur est commun aux deux articulations montées en série.
- Avantageusement, les actionneurs des deux articulations sont articulés en rotation sur le support commun.
- Avantageusement, le support commun forme une pièce monolithique.
- Avantageusement, la structure de reprise d'effort présente une première extrémité au niveau de laquelle la structure de reprise d'effort est encastrée sur le premier support et une deuxième extrémité au niveau de laquelle la structure de reprise d'effort est couplée au deuxième support par une rotule et dans lequel les première et deuxième extrémités de la structure de reprise d'effort sont solidaires. Ainsi, une liaison rigide relie les première et deuxième extrémités. Ces dernières ne sont pas articulées.
- Avantageusement, la structure de reprise d'effort s'étend d'un support à l'autre d'une même articulation.
- Avantageusement, la structure de reprise d'effort s'étend selon une direction principale perpendiculaire au plan dans lequel s'étend chaque support. La structure de reprise d'effort s'étend de manière sensiblement linéaire.
- Avantageusement, chaque articulation comprend une unique structure de reprise d'effort.
- Avantageusement, la première et la deuxième extrémités de chaque actionneur linéaire sont articulées respectivement au premier et au deuxième support uniquement par une liaison rotule.
- Avantageusement, chaque actionneur linéaire est configuré pour permettre un mouvement de translation uniquement. Avantageusement, chaque actionneur linéaire est un vérin.
- La première et la deuxième extrémités de chaque actionneur linéaire n'admettent ainsi pas de rotation relative.
- Selon l'invention, la structure de reprise d'effort comporte un tube creux portant une rotule creuse. Le connecteur est creux en son centre. Le système est configuré de manière à ménager un canal de passage traversant la structure de reprise d'effort et les premier et deuxième supports. Le canal de passage passe par le centre des supports. Le bras poly-articulé équipé d'une pluralité de systèmes hexapodes comprend au moins un câble ou au moins un conduit passant à travers le canal de passage de chacun des systèmes hexapodes. Les canaux de passage de chacun des systèmes hexapodes du bras forment un canal de passage continu.
- De préférence chaque structure de reprise d'effort comporte au moins un tube creux portant une rotule creuse, chaque articulation étant configurée de manière à ménager un canal de passage formé en partie au moins par la structure de reprise d'effort, le bras comprenant également au moins un câble ou au moins un conduit traversant l'ensemble des systèmes hexapodes en passant au travers de leur canal de passage.

Selon un mode de réalisation non limitatif, le robot est un robot de démantèlement et/ ou d'intervention dans un milieu hostile.

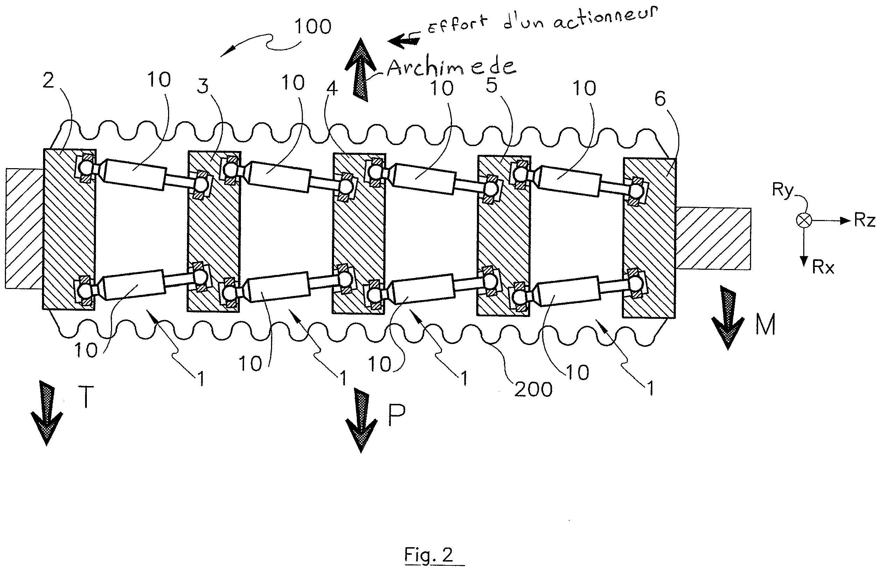

La figure 2 illustre un mode de réalisation d'un bras poly-articulé 100 selon l'invention. Le bras comprend une pluralité d'articulations 1 disposées en série. Typiquement, chaque articulation 1 comprend un premier 2 et un deuxième 3 support ainsi que des actionneurs linéaires 10 dont une extrémité est couplée par une liaison rotule au premier support et dont une autre extrémité par une autre liaison rotule au deuxième support. Le nombre actionneurs linéaires 10 est de un ou plus.

Selon un mode de réalisation avantageux mais non limitatif, l'articulation 1 comprend six actionneurs linéaires 10 et forme un hexapode.

En fonction de la configuration des actionneurs linéaires 10, rétractés ou déployés, un support d'une articulation 1 se déplace par rapport à l'autre support de cette articulation selon un ou plusieurs des six degrés de liberté. L'allongement ou le rétrécissement de chaque actionneur linéaire 10 permet ainsi de contrôler précisément et en trois dimensions la position et la forme du bras poly-articulé 100. Notamment, les actionneurs linéaires 10 permettent de déplacer la masse M illustrée sur la figure 2, en rotation autour des axes Rx et Ry. Le poids de la masse M est également représenté sur cette figure. Ce poids illustre la charge qui peut s'appliquer sur l'extrémité distale du bras poly-articulé 100. En lieu et place de ce poids, le bras pourrait exercer une force identique sur un élément extérieur au bras poly-articulé, par exemple dans le cas d'une intervention du bras visant à réparer un élément extérieur au bras.

Sur la figure 2, le premier support référencé 2 est solidaire d'un bâti. Les supports 3 à 6 sont donc mobiles. De manière avantageuse, deux articulations juxtaposées partagent un même support. Ainsi, sur le schéma de cette figure 1, cinq supports 2, 3, 4, 5, 6 permettent de former quatre articulations.

De manière particulièrement avantageuse, le bras poly-articulé 100 comprend une gaine 200 qui forme un manchon autour du bras poly-articulé 100 ou tout au moins autour des articulations 1.

Cette gaine 200 est étanche. Elle est déformable et peut suivre les mouvements des articulations. En cas de rotation autour d'un axe Rx ou Ry, la gaine 200 épouse la forme du bras poly-articulé 100. On remarquera que quelle que soit la courbure du bras 100, les centres des rayons de courbure des articulations se trouvent en dehors de cette dernière et le plus souvent en dehors de l'intérieur de la gaine 200. La déformation de la gaine est donc répartie sur une surface relativement grande de cette dernière. Les zones sollicitées en déformation sont donc étendues, ce qui réduit la fatigue de la gaine 200. Son étanchéité est donc efficace et durable.

La gaine 200 est donc bien adaptée pour faire évoluer le bras 100 dans un environnement dont les articulations doivent être protégées. Tel est le cas d'un réacteur à caloporteur sodium par exemple.

De préférence, la gaine 200 est fixée de manière étanche à l'une de ses extrémités au bâti ou au support 2 solidaire du bâti c'est-à-dire au support de l'extrémité proximale du bras 100. Elle est de préférence fixée à l'autre de ses extrémités au support 6 de l'extrémité distale du bras 100 ou à un élément solidaire de ce support 6.

De préférence, la gaine 200 présente une étanchéité continue entre ses deux extrémités. Elle peut être monolithique ou formée de plusieurs parties assemblées entre elles de manière étanche.

De manière préférée, la gaine 200 présente un volume constant ou est faiblement compressible. Ainsi, elle est déformable mais non ou peu compressible sous l'effet d'une pression extérieure. Soumise à une pression environnante relativement forte, typiquement comprise entre 1 et 10 Bars, la gaine 200 conserve un volume sensiblement constant. De manière plus générale, soumise à une pression environnante relativement forte, typiquement comprise entre 1 et 10 Bars, le volume de la gaine 200 ne décroit pas de plus de 10% et de préférence ne décroit pas de plus de 5%. Une telle pression extérieure peut par exemple être générée par un fluide dans lequel le bras poly-articulé 100 est immergé. C'est ce qui peut se passer lorsque le bras 100 réalise une mission d'ISIR dans un réacteur à caloporteur sodium.

La gaine 200 a un volume constant qui permet d'éviter qu'elle ne rentre au contact des actionneurs linéaires 10 sous l'effet d'une pression externe. Les risques de déchirure sont alors évités. Par ailleurs, la gaine 200 accroît le volume du bras poly-articulé 100 et augmente donc la poussée d'Archimède s'exerçant sur ce dernier. La poussée d'Archimède est illustrée sur la figure 2. Cette poussée d'Archimède compense tout ou partie du poids du bras poly-articulé 100. En effet, le poids propre du bras 100 a tendance à s'ajouter à la charge de la masse M porté par l'extrémité distale du bras et/ou par l'effort exercé par cette extrémité sur un élément extérieur. L'effort tranchant induit par le poids propre du bras 100 limite donc la capacité de charge de ce dernier. Grâce à l'invention, la capacité de charge que peut déployer le bras 100 est ainsi augmentée en compensant tout ou partie du poids propre du bras par la poussée d'Archimède.

Cela est particulièrement avantageux lorsque le bras 100 présente une masse élevée du fait de sa longueur, du nombre d'articulations qu'il comprend ou de la dimension de ces dernières.

Cela est particulièrement avantageux quand le bras est déployé à l'horizontal et / ou travaille dans une position déployée proche de l'horizontal.

Le fluide présent à l'intérieur de la gaine 200 est plus léger que celui du milieu environnant le bras 100. Typiquement, on privilégiera du gaz, par exemple de l'air, lorsque le bras poly-articulé 100 évolue dans un liquide. On pourra également prévoir un gaz plus léger que l'air, tel que l'hélium, lorsque le bras 100 évolue à l'air libre. Cela est d'autant plus avantageux que le poids du bras 100 induit un effort tranchant lorsqu'il n'est pas à la verticale. Ce poids et l'effort tranchant qu'il induit sont illustrés en figure 2.

De préférence, la gaine 200 est formée par un tube onduleux tel qu'un tube à soufflet. Avantageusement, elle est formée par un tube ondulé en métal, par exemple en inox. Le choix d'un tel matériau permet de résister à la pression du fluide environnant, voire à la contrainte de température et/ou chimique lorsqu'il s'agit par exemple d'un caloporteur sodium. La rigidité du tube onduleux permet à la gaine 200 de conserver un volume lui permettant de suivre les mouvements imprimés par le bras poly-articulé même en présence d'une pression extérieure.

Selon un autre mode de réalisation, la gaine 200 comprend une enveloppe externe souple et étanche ainsi qu'une ossature rigide sur laquelle s'appuie l'enveloppe souple. L'ossature forme ainsi une structure de soutien. Elle est par exemple en métal. Elle peut être rapportée sur le bras poly-articulé 100.

Selon un autre mode de réalisation, l'ossature est formée par les supports 2,...6 des articulations 1. Ces dernières sont donc dimensionnées pour maintenir l'enveloppe à distance les actionneurs linéaires 10 et des rotules de couplage des actionneurs linéaires aux supports.

Selon encore un autre mode de réalisation, on prévoit une gaine qui soit en partie déformable mais qui empêche une déformation qui entraînerait un contact entre la gaine et les actionneurs 10. Ainsi, on pourrait avoir une gaine formée par une enveloppe externe souple qui puisse se déformer jusqu'à rencontrer une ossature rigide l'empêchant de rentrer en contact avec les actionneurs linéaires 10. Ainsi, les risques de déchirure de la gaine au contact des actionneurs linéaires 10 sont supprimés.

Selon encore un autre mode de réalisation, le bras est configuré pour maintenir à l'intérieur de la gaine 200 une pression suffisante pour maintenir le volume de cette dernière. Ainsi, on peut prévoir d'injecter dans la gaine un gaz sous pression, de manière à ce que la pression à l'intérieur de la gaine 200 équilibre l'action de la pression environnante sur la gaine.

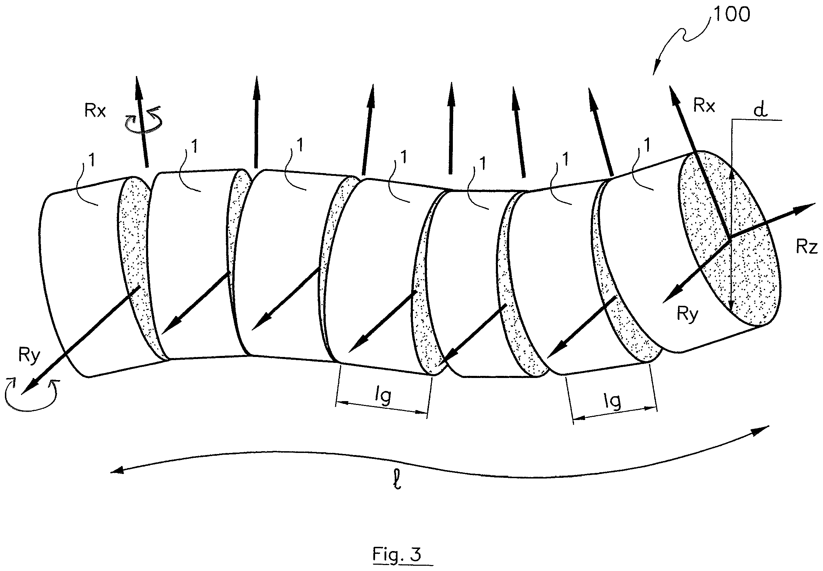

La figure 3 illustre de manière très schématisée le bras poly-articulé 100. Sur cette figure, le bras poly-articulé 100 comprend sept articulations 1. Selon un mode de réalisation particulier, chaque articulation 1 est un hexapode. Pour conférer au bras une bonne dextérité et lui permettre d'intervenir dans des zones difficilement accessibles, le rapport longueur (référence Ig sur la figure 3) sur diamètre (référence d sur la figure 3) doit être le plus petit possible tout en limitant le poids total du bras et donc le nombre d'articulations. De préférence, on choisira un rapport tel que :
0,5 < Ig/d < 1

On notera que les supports ne sont pas nécessairement des disques ou de forme circulaire, le diamètre d étant alors la dimension transversale maximale du support.

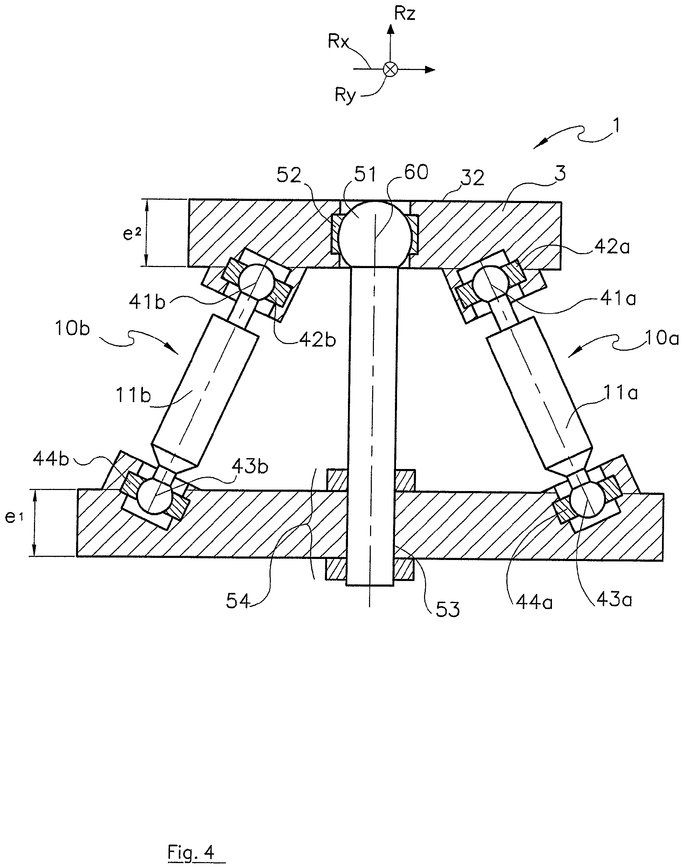

Les figures 4, 5 et 6 illustrent des modes de réalisation particulièrement avantageux d'articulations qui peuvent être disposées en série pour former un bras poly-articulé 100 selon l'invention. Cette articulation 1 comporte au moins trois et de préférence six actionneurs linéaires 10 comme mentionné précédemment. Ces articulations de type hexapode sont très efficaces lorsqu'il s'agit de mouvoir des masses portées par une platine supérieure dans une configuration où le poids exercé par cette masse est perpendiculaire à la platine. En revanche et comme illustré en figure 3, lorsque le bras n'est pas à la verticale, le poids de chaque articulation et le poids d'une masse fixée sur l'extrémité distale de l'articulation génèrent un moment et un effort tranchant. Cet effort réduit de façon très significative la capacité de charge du bras 100. Il est de même lorsque le bras doit exercer un effort transversal à la direction principale selon laquelle il s'étend, c'est-à-dire la direction Rz.

Pour remédier à cela, un mode de réalisation avantageux, dont un exemple est illustré en figure 4, prévoit de modifier les systèmes connus à trois ou plus actionneurs linéaires en intégrant une structure mécanique conformée pour reprendre l'effort tranchant T de manière à décharger les actionneurs linéaires de cet effort tranchant.

Cette structure de reprise de l'effort tranchant est logée de préférence au centre de l'hexapode. Elle est solidaire du support fixe et en liaison rotule avec le support à déplacer par rapport au support mobile. Cette articulation forme une rotule offrant deux degrés de liberté en rotation selon les axes souhaités, c'est-à-dire selon les axes Rx et Ry.

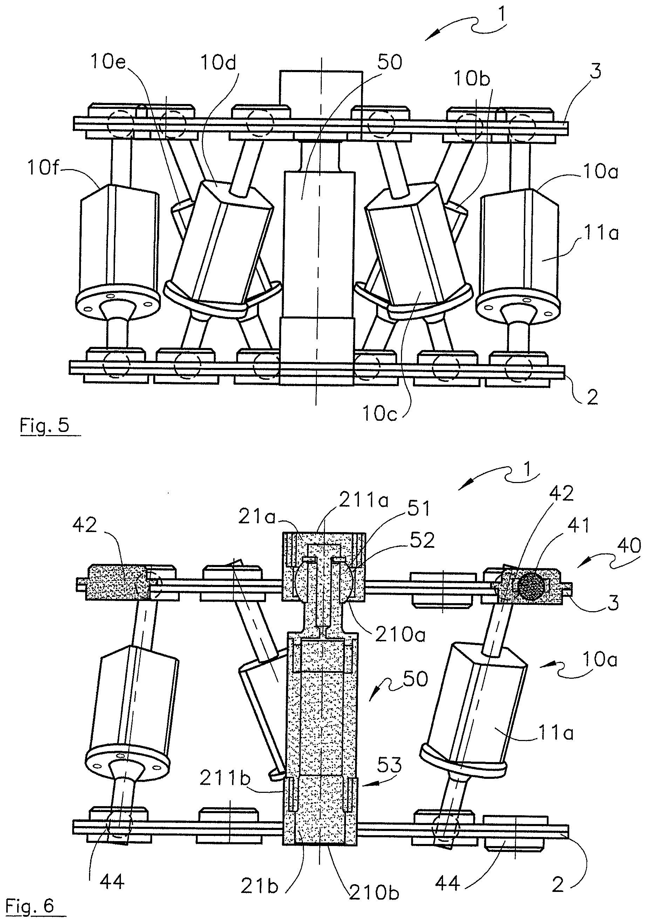

Des exemples de réalisation de cette articulation vont maintenant être décrits plus en détail respectivement en référence à la figure 4 et aux figures 5 et 6.

En figure 4, on a illustré un premier exemple d'articulation 1, typiquement un hexapode, comprenant un premier support 2 et un deuxième support 3. L'invention ne se limite à aucune forme particulière de support, de manière non limitative, chaque support peut présenter une forme planaire et constituer une platine.

De manière non limitative également, on considérera dans cette description que le deuxième support 3 doit être déplacé en rotation par rapport au premier support 2. Pour cela, six actionneurs linéaires 10a, 10b,...10f sont chacun articulés par l'une de leurs extrémités au premier support 2 par une liaison rotule 43a, 44a,...43f, 44f et articulés par une autre de leurs extrémités au deuxième support 3 par une autre liaison rotule 41a, 42a,...41f, 42f. Chaque liaison rotule 41a,...41f, 43a,...43f coopère avec un siège 42a... 42f, 44a,... 44f porté par un des deux supports 2, 3.

Ces actionneurs linéaires 10a,...,10f, également désignés bras d'articulation, comprennent par exemple des vérins hydrauliques, pneumatiques ou à vis par exemple. Ces actionneurs linéaires 10a,...10f sont disposés par paire de manière par exemple à ce que la liaison rotule de l'actionneur 10b soit disposée sur le premier support 2 plus proche de l'actionneur 10a que des autres actionneurs 10c....10f et de manière à ce que cet actionneur 10b soit disposé sur le deuxième support 3 plus proche de l'actionneur 10c que des autres actionneurs linéaires 10d,... 10a. Ainsi, cette disposition des actionneurs permet d'éviter les points de rebroussement ou de blocage du mécanisme.

Le système comporte également une structure de reprise d'effort 50. Cette structure est encastrée dans le premier support 2. Elle est couplée au deuxième support 3 par une liaison rotule 51, 52. Cette structure de reprise d'effort 50 est rigide. C'est-à-dire qu'elle est conformée pour transmettre des efforts (suivant Rx, Ry et Rz) entre l'encastrement 54 et la liaison rotule 51, 52. De préférence, elle ne comprend pas d'articulation autre que la liaison rotule 51, 52.

Selon un mode de réalisation avantageux illustré, cette structure forme un bras de liaison. Une extrémité 53 du bras de liaison coopère avec le premier support 2 pour former l'encastrement 54. L'autre extrémité du bras de liaison forme une rotule 51 qui coopère avec un siège 52 solidaire du deuxième support 3 pour former une liaison rotule 51, 52. Avantageusement, le bras de liaison forme un tube.

Le deuxième support 3 présente au moins deux degrés de liberté en rotation autour des axes Rx et Ry illustrés sur la figure 4, l'axe de rotation Rz étant l'axe de rotation propre du deuxième support 4. Dans le cas où la structure de reprise d'effort est sensiblement linéaire ou cylindrique ou conique selon sa direction principale, l'axe Rz est parallèle à la direction principale selon laquelle s'étend cette structure.

Dans un mode de réalisation particulier, le deuxième support 3 peut également tourner par rapport au premier support 2 selon l'axe Rz perpendiculaire aux axes Rx et Ry. Cette liberté en rotation selon l'axe Rz peut par exemple servir à visser un élément grâce à un outil porté par le support.

De préférence, lorsqu'une gaine 200 équipe le bras 100, on empêchera la rotation selon l'axe Rz pour éviter des risques de déchirement de la gaine 200. Cette suppression de la rotation selon l'axe Rz est par exemple obtenue par un pilotage des actionneurs linéaires 10.

De manière particulièrement avantageuse, le centre 60 de la liaison rotule 51, 52 est situé dans l'épaisseur du deuxième support 3. L'épaisseur du premier support est référence e₂ sur la figure 4. Par exemple dans le cas d'un deuxième support 3 formant une platine présentant une face inférieure 31 et une face supérieure 32, le centre 60 est situé entre ces deux faces 31, 32. Autrement dit, le centre 60 de rotation de la liaison rotule 51, 52 est situé entre deux plans parallèles entre eux, parallèles au plan défini par les axes Rx et Ry, et passant par le deuxième support 3.

De manière particulièrement avantageuse, les centres des rotules 41a,...41f, 43a...43f, sont situés respectivement dans l'épaisseur e₂ de la platine 3 et e₁ de la platine 2. Les centres 41a...41f sont coplanaires et le centre 60 appartient au plan contenant les centres 41a...41f. Cela participe à réduire les efforts s'exerçant que les actionneurs 11a...11f autres que ceux nécessaires à réaliser la mise en mouvement de la platine 3. Les centres 43a...43f sont également coplanaires.

Ainsi, l'invention supprime ou tout au moins réduit le bras de levier entre le centre de rotation 60 et le deuxième support 3 et les centres 41a...41f, limitant de ce fait les efforts tranchants devant être équilibré par les actionneurs 11a...11f au détriment des efforts nécessaires pour mettre en mouvement et les mouvements générés sur le deuxième support 3. La structure de reprise d'effort 50 permet notamment de reprendre l'effort tranchant qu'exercerait une force extérieure orientée non perpendiculairement au premier support 2 et s'exerçant sur le support 3. C'est-à-dire une force orientée non perpendiculairement au plan défini par les axes Rx et Ry.

L'encombrement et le poids du système peuvent alors être réduits tout en conservant sa capacité de charge en rotation selon les axes Rx et Ry.

De manière préférée, les liaisons rotules 41, 42 des actionneurs linéaires 10 avec le deuxième support 3 forment un contour plan. Le centre 60 de la liaison rotule 51, 52 de la structure de reprise d'effort 50 tranchant est situé de manière à ce qu'une droite perpendiculaire audit plan et passant par le centre 60 passe également à l'intérieur dudit contour. De préférence, les centres des rotules 41, 42 définissent un cercle et le centre 60 est situé au milieu du cercle ou sur une droite perpendiculaire au cercle et passant par le centre du cercle. Ainsi, les efforts du deuxième support 3 sont répartis de façon homogène sur la structure de reprise d'effort 50.

De préférence, il en est de même pour la liaison encastrée 54. Elle est de préférence située à l'intérieur d'un pourtour défini par le centre des liaisons rotule 43, 44. De préférence, ce pourtour forme un cercle et l'encastrement 54 est situé au milieu de ce cercle ou sur une droite perpendiculaire à ce cercle et passant par son centre.

Le mode de réalisation illustré aux figures 5 et 6 reprend les caractéristiques du mode de réalisation décrit ci-dessus en référence à la figure 4. En outre, dans ce mode de réalisation, le centre de rotation 41 des rotules articulant les actionneurs linéaires 10 sur le deuxième support 3 est rapproché de ce deuxième support 3. De préférence, le centre de rotation 41 est situé dans le plan ou dans l'épaisseur e₂ du deuxième support 3. Cela permet de réduire encore plus le bras de levier entre la rotule et le deuxième support 3 réduisant de ce fait les efforts appliqués sur ce support 3 et sur les actionneurs linéaires 10. L'encastrement et le poids du système peuvent alors être réduits tout en préservant la capacité d'entraînement en rotation selon les axes Rx et Ry.

De même, et de manière préférée, le centre de rotation 43 des rotules articulant les actionneurs linéaires 10 sur le premier support 2 est rapproché de ce premier support 2. De préférence, le centre de rotation 43 est situé dans le plan ou dans l'épaisseur e₁ du premier support 3.

De préférence, chaque support 2, 3 est une plaque en métal dont l'épaisseur est relativement faible par rapport à la hauteur du système, la hauteur du système étant prise selon la direction Rz. Ces plaques de métal peuvent être dotées de renforts augmentant leur rigidité suivant les axes Rx et Ry pour limiter leur déformation sous l'action des efforts générés par les actionneurs, la structure de reprise d'effort et les efforts extérieurs.

De préférence, les premier et deuxième supports 2, 3 sont des plaques sur lesquelles sont rapportés les sièges 42, 44 des liaisons rotule pour articuler les actionneurs linéaires 10. La fabrication du système en est ainsi facilitée.

De préférence, le deuxième support 3 comporte un connecteur 21a. Ce connecteur 21a comporte le siège 52 de la liaison rotule 51, 52 articulant la structure de reprise d'effort 50 sur le deuxième support 3. De préférence, ce connecteur 21a est également conformé pour accueillir l'extrémité d'une autre structure de reprise d'effort 50 pour former avec cette dernière un encastrement. Ainsi, un même connecteur peut servir pour former une liaison rotule et pour former un encastrement. Ainsi, les premier et deuxième supports 2, 3 peuvent être similaires ce qui facilite leur fabrication et leur coût.

De manière avantageuse, le premier support 2 comporte également un connecteur 21b. Ainsi, avant assemblage du système, les premier et deuxième supports 2, 3 sont identiques.

Selon un mode de réalisation particulier, les connecteurs 21a, 21b se présentent sous la forme d'un manchon présentant deux extrémités. Une première extrémité 210a, 210b est configurée pour accueillir le siège 52 et la rotule 51 permettant de former la liaison rotule 51, 52 de la structure de reprise d'effort 50 tranchant. Une deuxième extrémité 211a, 211b est configurée pour accueillir l'extrémité 53 de la structure 50 de manière à former avec cette dernière un encastrement. Typiquement, cette liaison encastrement 54 est obtenue par vissage de la structure de reprise d'effort 50 tranchant dans le connecteur 21a, 21b. Une goupille peut par exemple être prévue pour supprimer le degré de liberté en rotation restant.

De manière avantageuse, un même connecteur est configuré pour recevoir simultanément une première structure 50 pour former une liaison rotule et une deuxième structure 50 pour former une liaison-encastrement.

Ainsi, un même connecteur 21 et un même support peuvent être utilisés pour deux hexapodes montés en série.

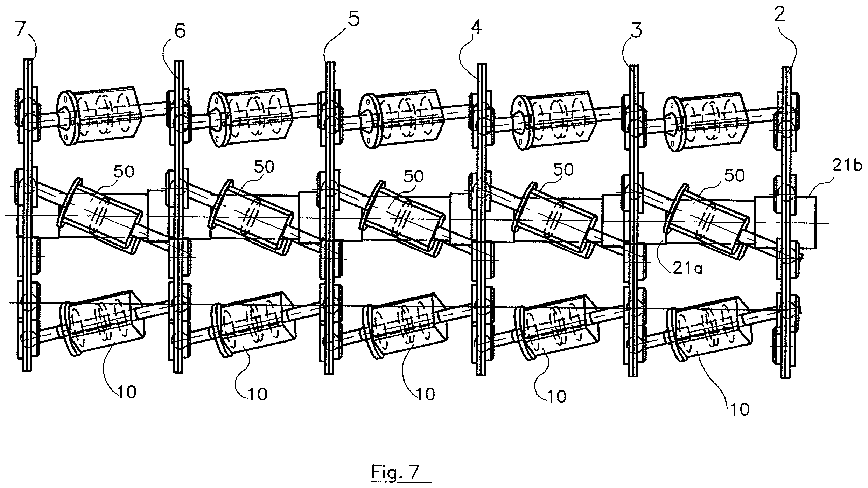

La figure 7 illustre clairement cet avantage de l'invention. Sur cette figure, le deuxième support 3 supporte un connecteur 21a qui coopère d'une part avec une structure de reprise d'effort 50 couplée au support 2 et d'autre part avec une autre structure de reprise d'effort 50 couplée au support 4. Cet agencement particulier du bras poly-articulé 100 présente une masse réduite et un assemblage facilité.

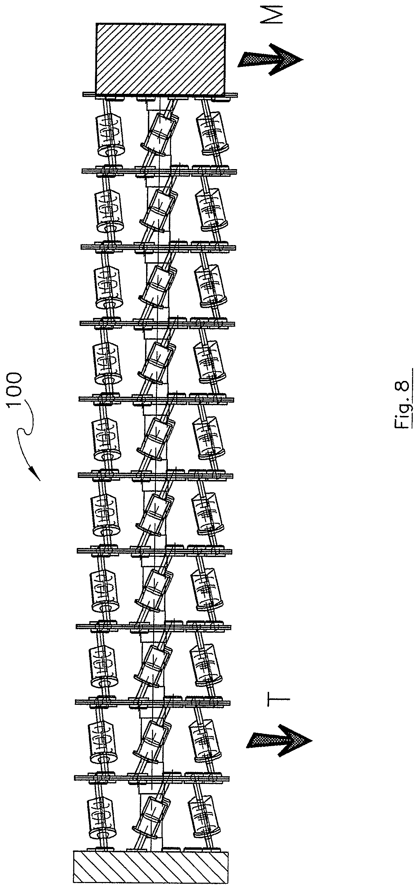

La figure 8 illustre le bras poly-articulé 100 de la figure 7 dans une configuration de travail dans lequel le poids de la masse M supportée par l'extrémité distale du bras 100 est transversal à la direction principale Rz selon laquelle le bras 100 s'étend. Le poids et l'effort tranchant générés sont représentés sur cette figure.

Les structures de reprise d'effort 50 jouent pleinement leur rôle et encaissent l'effort tranchant généré par le poids de la masse M et par le poids propre P du bras poly-articulé 100. La capacité de charge des actionneurs linéaires 10 est alors préservée et peut être entièrement dédiée à la génération du mouvement du bras pour déplacer la masse M en rotation selon les directions Rx et Ry ou pour exercer des actions sur des éléments extérieurs au bras 100 selon ces mêmes rotations.

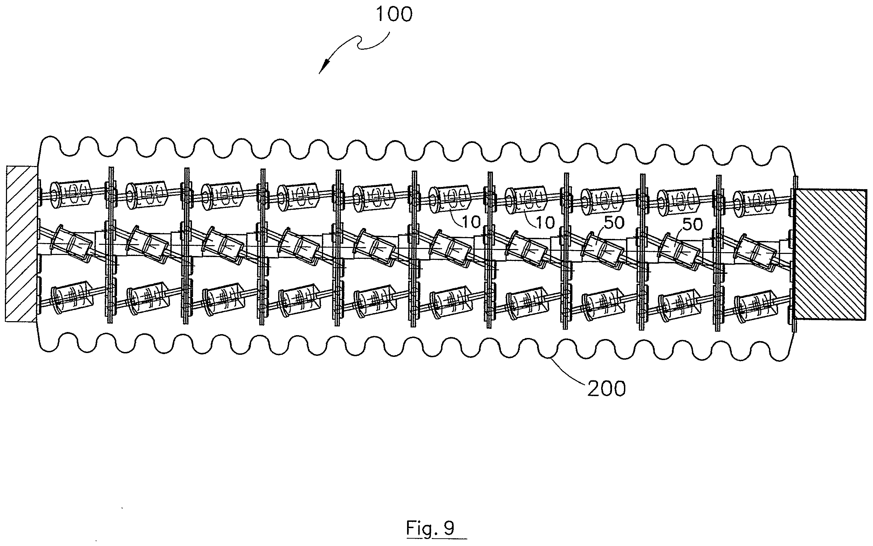

La figure 9 illustre un mode de réalisation dans lequel les articulations 1 comprennent chacune une structure de reprise d'effort 50 tranchant et dans lequel les articulations sont enveloppées dans une gaine 200.

Pour réaliser un bras poly-articulé pour des opérations d'ISIR dans un réacteur à caloporteur sodium, on pourra par exemple retenir les caractéristiques suivantes :
- nombre d'articulations : entre 10 et 30 ;
- longueur totale du bras poly-articulé : entre 2 et 15 mètres ;
- diamètre/dimension maximale des supports dans une direction transversale : entre 300 et 800 millimètres et de préférence 600 mm ;
- longueur d'une articulation en configuration déployée des actionneurs mécanique : entre 300 et 800 millimètres et de préférence 600 mm ;
- gaine formée par un tube onduleux en acier inoxydable ;
- force développable par chaque actionneur linéaire dans sa direction de travail : entre 0 et 100 kN.

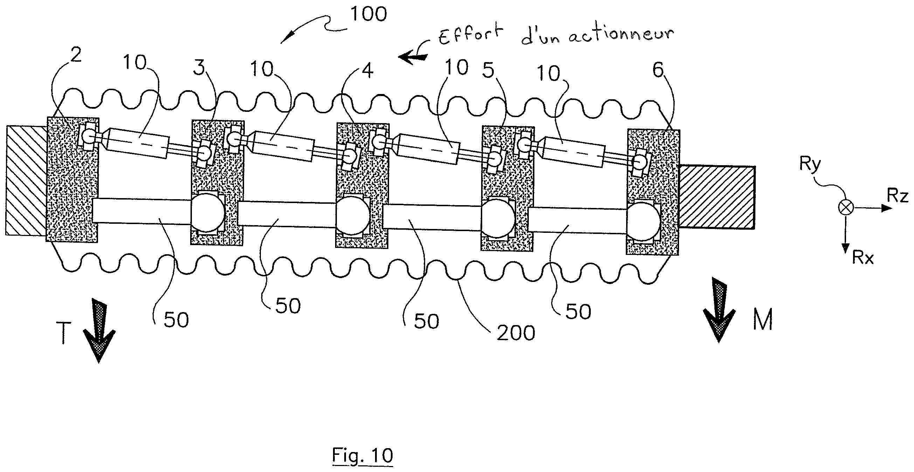

La figure 10 illustre un mode de réalisation particulier dans lequel une articulation 1 ne comprend qu'un seul actionneur linéaire 10. Dans ce mode de réalisation, la structure de reprise d'effort 50 est particulièrement avantageuse puisque le nombre d'actionneurs linéaires 10 étant limité à un seul, les efforts tranchants devraient alors être repris par ce seul actionneur linéaire ce qui limiterait la capacité de charge du bras poly-articulé 100. Un mode particulier est de mettre une rotule à doigts, pour bloquer le mouvement de rotation autour de Rz car un tel mouvement est incompatible avec un mouvement de soufflet. En revanche si on ne bloque pas ce mouvement de rotation on peut envisager de pouvoir visser.

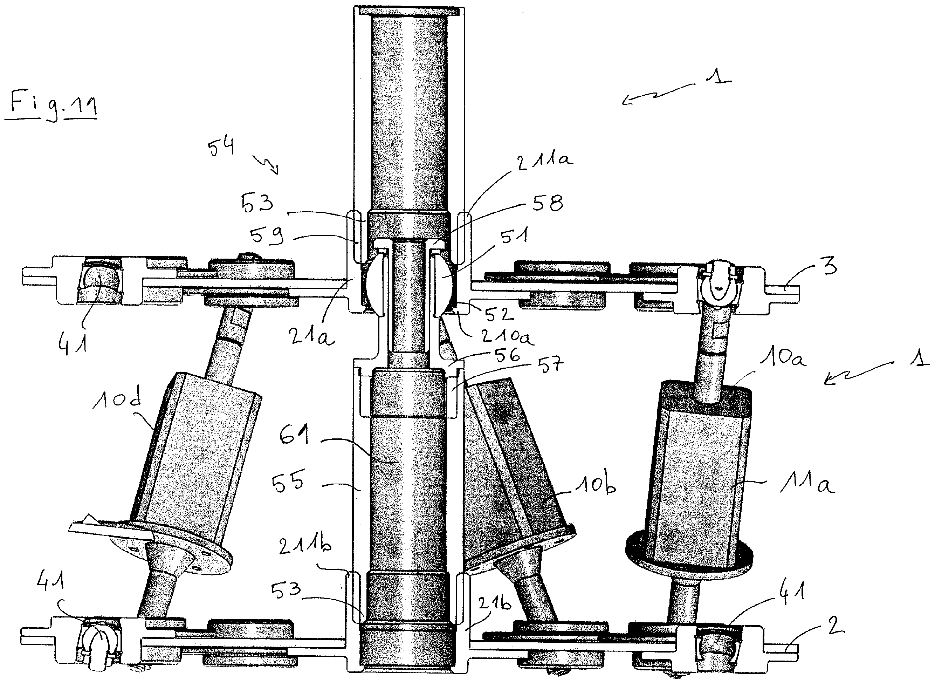

La Figure 11 illustre un mode de réalisation optionnel mais particulièrement avantageux. Dans ce mode de réalisation, la structure de reprise d'effort 50 est entièrement creuse. Chaque système hexapode 1 présente ainsi un canal de passage 61. Cela permet d'alléger l'ensemble de de l'articulation 1 et donc d'alléger le bras poly-articulé ou d'autoriser une capacité de charge accrue pour un poids équivalent. Cela permet également de faire passer des câbles ou des conduits au centre de la liaison. Une rotation de l'articulation autour de l'axe Rz, c'est-à-dire autour de l'axe selon lequel s'étend principalement la structure de reprise d'effort, n'entraine ainsi pas de vrillage des câbles ou conduits traversant cette dernière, et cela même si ces câbles ou conduits s'étendent d'une extrémité à l'autre du bras poly-articulé. Par ailleurs, le positionnement des câbles au centre de l'articulation évite l'élongation de ceux-ci lors des mouvements de l'articulation. Ces câbles sont par exemple des câbles électriques, permettant par exemple de piloter des outils disposés sur le bras ou permettant de communiquer avec des capteurs supportés par le bras. Des conduits peuvent permettre de piloter et d'actionner des outils, par exemple pneumatiques ou hydrauliques disposés sur le bras. Ces conduits peuvent également permettre d'injecter, de prélever ou d'extraire un fluide depuis l'extrémité du bras.

Selon le mode de réalisation non limitatif illustré en figure 11, la structure de reprise d'effort 50 est sensiblement similaire à celle décrite en référence aux figures 5 et 6.

Le connecteur 21a est creux. Il comporte un alésage interne, traversant.

La deuxième extrémité 211a du connecteur comporte un filetage interne 59 coopérant avec un filetage externe situé sur la face externe d'une première extrémité 53 du tube creux 55 de la structure de reprise d'effort.

La première extrémité 210a du connecteur comporte une réduction de section qui empêche la rotule 51 de sortir de l'alésage formé par le connecteur.

Le tube creux 55 comprend une deuxième extrémité portant sur sa face interne un filetage 57 conformé pour coopérer avec un filetage complémentaire porté par une face externe d'une pièce formant support 56 de rotule pour la rotule 51. Ce support 56 de rotule se fixe ainsi sur le tube creux 55 par vissage. Ce mode de réalisation permet de simplifier considérablement la fabrication et le montage des articulations.

Le support 56 de rotule comprend une portion de réception de la rotule 51. La rotule 51 forme principalement une sphère qui comprend un alésage complémentaire de cette portion de réception et s'enfile sur cette dernière depuis l'extrémité du support 56 de rotule. Une butée de rétention est également prévue pour empêcher le retrait de la rotule 51. Cette butée comprend de préférence une vis présentant un filetage externe qui coopère avec un filetage interne porté par l'alésage du support 56 de rotule 51. Ainsi la vis se fixe sur l'extrémité du support 56 de rotule 51. La tête de vis présente une section supérieure à l'alésage de la rotule 51. Cette dernière bute ainsi contre la face inférieure de la tête de vis. De préférence, une rondelle est prévue entre la tête de vis 58 et la rotule 51.

De manière particulièrement avantageuse, la vis est creuse. La structure de reprise d'effort 50 comprenant les deux connecteurs 21a, 21b, le tube creux 55, le support 56 de rotule 51, la rotule 51 et la vis 58 présente donc une ouverture traversante formant un canal de passage 61 d'un câble ou d'un conduit.

Avantageusement, le montage d'une articulation 1 s'effectue de la manière suivante :
- fixation, par vissage de préférence, du tube creux 55 sur le connecteur 21b solidaire du support 2;
- fixation, par vissage de préférence, du support 56 de rotule 51 sur le tube creux 55;
- passage du support 56 de rotule 51 au travers du connecteur 21a solidaire du support 3;
- positionnement de la rotule 51 sur la portion de réception portée par le support 56 de rotule et à l'intérieur du siège 52 formé par le connecteur 21a ;
- fixation, par vissage de préférence, de la butée de rétention, ici la vis creuse 58 et la rondelle sur le support 56 de rotule 51.

L'assemblage du bras peut ensuite se poursuivre par l'assemblage d'une deuxième articulation. Pour cela, on réitère les étapes ci-dessus à partir du connecteur 21a du support 3. La première étape consiste ainsi à fixer un autre tube creux sur le connecteur 21a.

D'autres modes de réalisation sont envisageables pour ménager un canal traversant chacune des articulations.

Il apparaît ainsi clairement que l'invention offre une solution robuste pour former un bras poly-articulé dont les articulations sont efficacement protégées du milieu environnant. Par ailleurs, le bras poly-articulé selon l'invention permet une bonne dextérité selon au moins deux degrés de rotation et présente une capacité de charge élevée même s'il présente une grande longueur.

L'invention s'avère ainsi particulièrement efficace pour former un bras poly-articulé utilisé dans les missions d'inspection ou de réparation en milieu contraignant tel que dans des réacteurs nucléaires.

L'invention n'est pas limitée aux modes de réalisations précédemment décrits et s'étend à tous les modes de réalisation couverts par les revendications.

En particulier, bien qu'elle soit particulièrement avantageuse pour des missions d'inspection et de réparation en milieu nucléaire, l'invention s'applique également aux bras mécanisés ayant d'autres missions ou étant destinés à évoluer dans d'autres environnements.

## Revendications

1. Bras (100) articulé comprenant au moins trois articulations (1) montées en série pour autoriser des mouvements du bras (100) selon au moins deux axes de rotation (Rx, Ry) par articulation, chaque articulation (1) comprend un premier (2) et un deuxième (3) supports et au moins trois actionneurs linéaires (10), chaque actionneur linéaire (10) présentant une première et une deuxième extrémités articulées respectivement au premier (2) et au deuxième (3) support par une liaison rotule (41, 42, 43, 44), le bras (100) comprenant une gaine (200) étanche, déformable, enveloppant les articulations (1) et conformée pour suivre le mouvement du bras (100) articulé et pour être maintenue à distance des actionneurs linéaires (10) et des liaisons rotule (41, 42, 43, 44) quel que soit le mouvement du bras (100) articulé, au moins une articulation (1) comprenant une structure de reprise d'effort (50) qui est d'une part encastrée sur le premier support (2) et d'autre part couplée au deuxième support (3) par une rotule (51, 52), chaque structure de reprise d'effort (50) comportant au moins un tube creux (55) portant une rotule (51) creuse, le bras (100) étant configuré de manière à ménager un canal de passage (61) traversant la structure de reprise d'effort (50) et les premier (2) et deuxième (3) supports.

2. Bras (100) articulé selon la revendication précédente, dans lequel les liaisons rotules (43, 44) par lesquelles les actionneurs linéaires (10a.., 10f) sont articulés au premier support (2) présentent chacune un centre de rotation qui est situé dans l'épaisseur du premier support (2) et les liaisons rotules (41, 42) par lesquelles les actionneurs linéaires (10a.., 10f) sont articulés au deuxième support (3) présentent un centre de rotation qui est situé dans l'épaisseur du deuxième support (3).

3. Bras (100) articulé selon l'une quelconque des revendications précédentes, dans lequel la structure de reprise d'effort (50) est encastrée sur le premier support (2) au centre d'un cercle formé par les liaisons rotules (43, 44) par lesquelles les actionneurs linéaires (10a.., 10f) sont articulés sur le premier support (2).

4. Bras (100) articulé selon l'une quelconque des revendications précédentes, dans lequel le centre de rotation (60) de la rotule formée par le deuxième support (3) et la structure de reprise d'effort (50) est situé au centre d'un cercle formé par les liaisons rotules (41, 42) par lesquelles les actionneurs linéaires (10) sont articulés sur le deuxième support (3) ou est situé sur une droite perpendiculaire audit cercle et passant par le centre dudit cercle,

5. Bras (100) articulé selon l'une quelconque des revendications précédentes, dans lequel au moins l'une des articulations (1) comprend six actionneurs linéaires (10) de manière à former une articulation hexapode.

6. Bras (100) articulé selon l'une quelconque des revendications précédentes, dans lequel le volume de la gaine (200) reste constant ou ne varie pas de plus de 10% lorsque le bras (100) est soumis à une pression inférieure ou égale à 10 bars.

7. Bras (100) articulé selon l'une quelconque des revendications précédentes, dans lequel la gaine (200) est un tube onduleux.

8. Bras (100) articulé selon l'une quelconque des revendications précédentes, dans lequel le bras (100) comprend une structure de soutien configurée pour maintenir la gaine (200) à distance des actionneurs linéaires (10) et/ou configuré pour faire régner à l'intérieur de la gaine (200) une pression adaptée pour maintenir la gaine (200) à distance des actionneurs linéaires (10).

9. Bras (100) articulé selon l'une quelconque des revendications précédentes, dans lequel la gaine (200) comprend une enveloppe étanche soutenue par une structure de soutien ou dans lequel la gaine (200) est monolithique.

10. Bras (100) articulé selon l'une quelconque des revendications précédentes, dans lequel chaque articulation (1) présente une longueur et une largeur telles que le rapport longueur sur largeur est compris entre 0.5 et 1, la longueur étant prise selon la direction longitudinale du bras (100) et la largeur étant prise selon une direction transversale à la direction longitudinale.

11. Bras (100) articulé selon l'une quelconque des revendications précédentes, dans lequel le centre de rotation (60) de la rotule (51, 52) de couplage de la structure de reprise d'effort (50) au deuxième support (3) est situé dans l'épaisseur du deuxième support (3).

12. Bras (100) articulé selon l'une quelconque des revendications précédentes, dans lequel deux articulations (1) en série comprennent un support commun.

13. Bras (100) articulé selon l'une quelconque des revendications précédentes, dans lequel au moins un support pris parmi le premier (2) et le deuxième (3) support du système hexapode (1) comporte un connecteur (21a, 21b) configuré pour coopérer avec une structure de reprise d'effort (50) de manière à former respectivement un encastrement (54) et une rotule (51, 52) et dans lequel le connecteur (21a, 21b) est en outre configuré de manière à coopérer avec une deuxième structure de reprise d'effort d'une deuxième articulation (1), les deux articulations (1) étant montées en série, de manière à former avec cette deuxième structure de reprise d'effort une liaison rotule (51), respectivement un encastrement, le même connecteur (21a) coopérant ainsi avec les structures de reprise d'effort (50) de deux articulations (1) montées en série.

14. Bras (100) selon l'une quelconque des revendications précédentes, dans lequel la structure de reprise d'effort (50) présente une première extrémité au niveau de laquelle la structure de reprise d'effort (50) est encastrée sur le premier support (2) et une deuxième extrémité au niveau de laquelle la structure de reprise d'effort (50) est couplée au deuxième support (3) par une rotule (51, 52) et dans lequel les première et deuxième extrémités de la structure de reprise d'effort (50) sont solidaires.

15. Bras (100) selon l'une quelconque des revendications précédentes, dans lequel chaque articulation (1) comprend une unique structure de reprise d'effort (50).

16. Bras (100) selon l'une quelconque des revendications précédentes, comprenant également au moins un câble ou au moins un conduit traversant l'ensemble des systèmes hexapodes (1) en passant au travers de leur canal de passage (61).

## Patentansprüche

1. Gelenkarm (100), mindestens drei Gelenke (1) umfassend, die in Reihe montiert sind, um Bewegungen des Armes (100) entlang mindestens zweier Drehachsen (Rx, Ry) je Gelenk zu erlauben, wobei jedes Gelenk (1) einen ersten (2) und einen zweiten (3) Träger und mindestens drei lineare Aktoren (10) umfasst, wobei jeder lineare Aktor (10) ein erstes und ein zweites Ende aufweist, die jeweils durch eine Kugelgelenkverbindung (41, 42, 43, 44) an den ersten (2) und an den zweiten (3) Träger angelenkt sind, wobei der Arm (100) eine dichte, verformbare Hülle (200) umfasst, die die Gelenke (1) einhüllt, und ausgeformt ist, um der Bewegung des Gelenkarmes (100) zu folgen, und um unabhängig von der Bewegung des Gelenkarmes (100) auf Abstand zu den linearen Aktoren (10) und den Kugelgelenkverbindungen (41, 42, 43, 44) gehalten zu werden, wobei mindestens ein Gelenk (1) eine Kraftaufnahmestruktur (50) umfasst, die einerseits im ersten Träger (2) eingebettet ist und andererseits durch eine Kugelgelenkverbindung (51, 52) an den zweiten Träger (3) gekoppelt ist, wobei jede Kraftaufnahmestruktur (50) mindestens eine hohle Röhre (55) beinhaltet, die ein hohles Kugelgelenk (51) trägt, wobei der Arm (100) derart konfiguriert ist, um einen Verlaufskanal (61) vorzusehen, der die Kraftaufnahmestruktur (50) und den ersten (2) und zweiten Träger (3) durchquert.

2. Gelenkarm (100) nach dem vorstehenden Anspruch, wobei die Kugelgelenkverbindungen (43, 44), durch die die linearen Aktoren (10a, ... 10f) an den ersten Träger (2) angelenkt sind, jeweils eine Drehmitte aufweisen, die sich in der Dicke des ersten Trägers (2) befindet, und wobei die Kugelgelenkverbindungen (41, 42), durch die die linearen Aktoren (10a, ... 10f) an den zweiten Träger (3) angelenkt sind, eine Drehmitte aufweisen, die sich in der Dicke des zweiten Trägers (3) befindet.

3. Gelenkarm (100) nach einem der vorstehenden Ansprüche, wobei die Kraftaufnahmestruktur (50) in dem ersten Träger (2) in der Mitte eines Kreises eingebettet ist, der durch die Kugelgelenkverbindungen (43, 44) gebildet wird, durch die die linearen Aktoren (10a, ... 10f) an den ersten Träger (2) angelenkt sind

4. Gelenkarm (100) nach einem der vorstehenden Ansprüche, wobei sich die Drehmitte (60) des Kugelgelenks, das durch den zweiten Träger (3) und die Kraftaufnahmestruktur (50) gebildet wird, in der Mitte eines Kreises befindet, der durch die Kugelgelenkverbindungen (41, 42) gebildet wird, durch die die linearen Aktoren (10) an dem zweiten Träger (3) angelenkt sind, oder sich auf einer Geraden senkrecht zum Kreis befindet, und durch die Mitte des Kreises verläuft.

5. Gelenkarm (100) nach einem der vorstehenden Ansprüche, wobei mindestens eines der Gelenke (1) sechs lineare Aktoren (10) umfasst, um ein sechsfüßiges Gelenk zu bilden.

6. Gelenkarm (100) nach einem der vorstehenden Ansprüche, wobei das Volumen der Hülle (200) konstant bleibt, oder um nicht mehr als 10% variiert, wenn der Arm (100) einem Druck kleiner oder gleich 10 bar ausgesetzt wird.

7. Gelenkarm (100) nach einem der vorstehenden Ansprüche, wobei die Hülle (200) ein Wellrohr ist.

8. Gelenkarm (100) nach einem der vorstehenden Ansprüche, wobei der Arm (100) eine Stützstruktur umfasst, die konfiguriert ist, um die Hülle (200) auf Abstand zu den linearen Aktoren (10) zu halten, und/ oder konfiguriert ist, um im Inneren der Hülle (200) einen Druck wirken zu lassen, um die Hülle (200) auf Abstand zu den linearen Aktoren (10) zu halten.

9. Gelenkarm (100) nach einem der vorstehenden Ansprüche, wobei die Hülle (200) eine dichte Ummantelung umfasst, die von einer Stützstruktur gestützt wird, oder wobei die Hülle (200) monolithisch ist.

10. Gelenkarm (100) nach einem der vorstehenden Ansprüche, wobei jedes Gelenk (1) eine Länge und eine Breite aufweist, sodass das Verhältnis von Länge zu Breite zwischen 0,5 und 1 enthalten ist, wobei die Länge entlang der Längsrichtung des Armes (100) genommen wird, und die Breite entlang einer Querrichtung zur Längsrichtung genommen wird.

11. Gelenkarm (100) nach einem der vorstehenden Ansprüche, wobei sich die Drehmitte (60) des Kopplungskugelgelenks (51, 52) der Kraftaufnahmestruktur (50) am zweiten Träger (3) in der Dicke des zweiten Trägers (3) befindet.

12. Gelenkarm (100) nach einem der vorstehenden Ansprüche, wobei die beiden Gelenke (1) in Reihe einen gemeinsamen Träger umfassen.

13. Gelenkarm (100) nach einem der vorstehenden Ansprüche, wobei mindestens ein Träger, der aus dem ersten (2) und dem zweiten Träger (3) des sechsfüßigen Systems (1) einen Steckverbinder (21a, 21b) beinhaltet, der konfiguriert ist, um mit einer Kraftaufnahmestruktur (50) zusammenzuwirken, um jeweils eine Einbettung (54) und ein Kugelgelenk (51, 52) zu bilden, und wobei der Steckverbinder (21a, 21b) weiter derart konfiguriert ist, um mit einer zweiten Kraftaufnahmestruktur eines zweiten Gelenks (1) zusammenzuwirken, wobei die beiden Gelenke (1) in Reihe montiert sind, um mit dieser zweiten Kraftaufnahmestruktur eine Kugelgelenkverbindung (51), beziehungsweise eine Einbettung zu bilden, wobei derselbe Steckverbinder (21a) somit mit den Kraftaufnahmestrukturen (50) zweier in Reihe montierter Gelenke (1) zusammenwirkt.

14. Arm (100) nach einem der vorstehenden Ansprüche, wobei die Kraftaufnahmestruktur (50) ein erstes Ende aufweist, im Bereich dessen die Kraftaufnahmestruktur (50) in dem ersten Träger (2) eingebettet ist, und ein zweites Ende, im Bereich dessen die Kraftaufnahmestruktur (50) durch ein Kugelgelenk (51, 52) an den zweiten Träger (3) gekoppelt ist, und wobei das erste und zweite Ende der Kraftaufnahmestruktur (50) fest miteinander verbunden sind.

15. Arm (100) nach einem der vorstehenden Ansprüche, wobei jedes Gelenk (1) eine einzige Kraftaufnahmestruktur (50) umfasst.

16. Arm (100) nach einem der vorstehenden Ansprüche, auch mindestens ein Kabel oder mindestens eine Rohrleitung umfassend, das/ die alle sechsfüßigen Systeme (1) durchquert, indem es/ sie durch deren Verlaufskanal (61) hindurch verläuft.

## Claims

1. An articulated arm (100) comprising at least three articulations (1) mounted in series to allow movements of the arm (100) according to at least two axes of rotation (Rx, Ry) per articulation, each articulation (1) comprises a first (2) and a second (3) supports and at least three linear actuators (10), each linear actuator (10) having a first and a second ends articulated respectively to the first (2) and to the second (3) support by a ball joint connection (41, 42, 43, 44), the arm (100) comprising a sealed, deformable sheath (200) enveloping the articulations (1) and shaped to follow the movement of the articulated arm (100) and to be maintained at a distance from the linear actuators (10) and the ball joint connections (41, 42, 43, 44) regardless of the movement of the articulated arm (100), at least one articulation (1) comprising a force-absorbing structure (50) which is on the one hand embedded on the first support (2) and on the other hand coupled to the second support (3) by a ball joint (51, 52), each force-absorbing structure (50) including at least one hollow tube (55) carrying a hollow ball joint (51), the arm (100) being configured so as to provide a channel passage (61) passing through the force-absorbing structure (50) and the first (2) and second (3) supports.

2. The articulated arm (100) according to the preceding claim, wherein the ball joint connections (43, 44) by which the linear actuators (10a ..., 10f) are articulated to the first support (2) each have a centre of rotation which is located in the thickness of the first support (2) and the ball joint connections (41, 42) by which the linear actuators (10a ..., 10f) are articulated to the second support (3) have a centre of rotation which is located in the thickness of the second support (3).

3. The articulated arm (100) according to any one of the preceding claims, wherein the force-absorbing structure (50) is embedded on the first support (2) at the centre of a circle formed by the ball joint connections (43, 44) by which the linear actuators (10a ..., 10f) are articulated on the first support (2).

4. The articulated arm (100) according to any one of the preceding claims, wherein the centre of rotation (60) of the ball joint formed by the second support (3) and the force-absorbing structure (50) is located at the centre of a circle formed by the ball joint connections (41, 42) by which the linear actuators (10) are articulated on the second support (3) or is located on a straight line perpendicular to said circle and passing through the centre of said circle,

5. The articulated arm (100) according to any one of the preceding claims, wherein at least one of the articulations (1) comprises six linear actuators (10) so as to form a hexapod articulation.

6. The articulated arm (100) according to any one of the preceding claims, wherein the volume of the sheath (200) remains constant or does not vary by more than 10% when the arm (100) is subjected to a pressure less than or equal to 10 bars.

7. The articulated arm (100) according to any one of the preceding claims, wherein the sheath (200) is a corrugated tube.

8. The articulated arm (100) according to any one of the preceding claims, wherein the arm (100) comprises a support structure configured to maintain the sheath (200) at a distance from the linear actuators (10) and/or configured to maintain inside the sheath (200) a pressure adapted to keep the sheath (200) at a distance from the linear actuators (10).

9. The articulated arm (100) according to any one of the preceding claims, wherein the sheath (200) comprises a sealed envelope supported by a support structure or wherein the sheath (200) is monolithic.

10. The articulated arm (100) according to any one of the preceding claims, wherein each articulation (1) has a length and a width such that the length to width ratio is comprised between 0.5 and 1, the length being taken in the longitudinal direction of the arm (100) and the width being taken in a direction transverse to the longitudinal direction.

11. The articulated arm (100) according to any one of the preceding claims, wherein the centre of rotation (60) of the ball joint (51, 52) for coupling the force-absorbing structure (50) to the second support (3) is located in the thickness of the second support (3).

12. The articulated arm (100) according to any one of the preceding claims, wherein two articulations (1) in series comprise a common support.

13. The articulated arm (100) according to any one of the preceding claims, wherein at least one support taken from the first (2) and the second (3) support of the hexapod system (1) includes a connector (21a, 21b) configured to cooperate with a force-absorbing structure (50) so as to respectively form an embedding (54) and a ball joint (51, 52) and wherein the connector (21a, 21b) is further configured so as to cooperate with a second force-absorbing structure of a second articulation (1), the two articulations (1) being mounted in series, so as to form with this second force-absorbing structure a ball joint connection (51), respectively an embedding, the same connector (21a) thus cooperating with the force-absorbing structures (50) of two articulations (1) mounted in series.

14. The arm (100) according to any one of the preceding claims, wherein the force-absorbing structure (50) has a first end at which the force-absorbing structure (50) is embedded on the first support (2) and a second end at which the force-absorbing structure (50) is coupled to the second support (3) by a ball joint (51, 52) and wherein the first and second ends of the force-absorbing structure (50) are secured.

15. The arm (100) according to any one of the preceding claims, wherein each articulation (1) comprises a single force-absorbing structure (50).

16. The arm (100) according to any one of the preceding claims, also comprising at least one cable or at least one conduit passing through all the hexapod systems (1) passing through their passage channel (61).
